# DEMANDE DE BREVET EUROPEEN

(11) **EP 4 068 681 A1**
(43) Date de publication de la demande: **05.10.2022**
(21) Numéro de dépôt: 22164864.5
(22) Date de dépôt: 28.03.2022
(51) Int. Cl.: H04L 9/08, H04L 9/14

(54) **PROCÉDÉ ET DISPOSITIF POUR LE DÉCHIFFREMENT SÉCURISÉ DE DONNÉES CHIFFRÉES**

(30) Priorité: 31.03.2021 FR 2103318
(71) Demandeur: STMicroelectronics (ALPS) SAS, 38000 Grenoble (FR); STMicroelectronics (Grand Ouest) SAS, 72100 Le Mans (FR)
(72) Inventeur: ALBESA, Franck, 72250 PARIGNE L'EVEQUE (FR); ANQUET, Nicolas, 38000 GRENOBLE (FR)
(74) Mandataire: Cabinet Beaumont

(57) **Abrégé**

La présente description concerne un procédé de déchiffrement de données chiffrées, le procédé comprenant :
- la génération d'une première valeur de comptage par un compteur monotone (106) d'un dispositif de traitement (102);
- la dérivation, en utilisant un circuit de dérivation de clefs (118), d'une première clef de chiffrement sur la base de la première valeur de comptage ;
- la transmission de la première clef de chiffrement à un processeur cryptographique (116) ; et
- le déchiffrement, sur la base de la première clef de chiffrement, de premières données chiffrées.

## Description

### Domaine technique

La présente description concerne le domaine des procédés et dispositifs pour la sécurité de circuits électroniques, et en particulier un dispositif et un procédé de déchiffrement de données.

### Technique antérieure

Certains dispositifs de traitement comprennent des processeurs cryptographiques nécessitant l'utilisation de clefs de chiffrement qui ne doivent pas être accessibles depuis l'extérieur du dispositif.

Par exemple, le fonctionnement d'un dispositif de traitement est assuré par l'exécution de codes, stockés dans une mémoire non volatile du dispositif, utilisés dans la vie du circuit. Pour des raisons de sécurité, certains codes sont stockés de façon cryptée, et des clefs de chiffrement peuvent être chargées afin de déchiffrer ces codes.

### Résumé de l'invention

Il existe un besoin récurrent d'améliorer la sécurité du stockage de telles clefs de chiffrement.

Un mode de réalisation prévoit un procédé de déchiffrement de données chiffrées, le procédé comprenant :
- la génération d'une première valeur de comptage par un compteur monotone d'un dispositif de traitement ;
- la dérivation, en utilisant un circuit de dérivation de clefs, d'une première clef de chiffrement sur la base de la première valeur de comptage ;
- la transmission de la première clef de chiffrement à un processeur cryptographique ; et
- le déchiffrement, sur la base de la première clef de chiffrement, de premières données chiffrées.

Selon un mode de réalisation, les premières données chiffrées comprennent un premier ensemble d'une ou plusieurs autres clefs de chiffrement chiffrées associées à la première valeur de comptage.

Selon un mode de réalisation, le procédé comprend en outre :
- la sélection du premier ensemble d'autres clefs de chiffrement chiffrées dans une mémoire ; et
- la mise à disposition du premier ensemble d'autres clefs de chiffrement chiffrées au processeur cryptographique, dans lequel le déchiffrement de premières données comprend le déchiffrement, par le processeur cryptographique sur la base de la première clef de chiffrement, du premier ensemble d'autres clefs de chiffrement chiffrées.

Selon un mode de réalisation, le procédé comprend en outre :
- le déchiffrement, par le processeur cryptographique ou par un autre processeur cryptographique, des premières autres données chiffrées stockées dans la mémoire ou dans une autre mémoire, sur la base du premier ensemble d'autres clefs de chiffrement déchiffrées.

Selon un mode de réalisation, le déchiffrement des premières autres données chiffrées est effectué par le processeur cryptographique, le premier ensemble d'autres clefs de chiffrement déchiffrées étant stocké dans une mémoire du processeur cryptographique.

Selon un mode de réalisation, le procédé comprend en outre :
- la génération d'une deuxième valeur de comptage par le compteur monotone du dispositif de traitement ;
- la dérivation, en utilisant le circuit de dérivation de clefs, d'une deuxième clef de chiffrement sur la base de la deuxième la valeur de comptage ;
- la transmission de la deuxième clef de chiffrement au processeur cryptographique ; et
- le déchiffrement, sur la base de la deuxième clef de chiffrement, de deuxièmes données chiffrées.

Selon un mode de réalisation, le compteur monotone est initialisé à la première valeur de comptage lors d'un premier démarrage du dispositif de traitement, le procédé comprenant en outre, l'initialisation du compteur monotone à la deuxième valeur de comptage lors un deuxième démarrage du dispositif de traitement.

Selon un mode de réalisation, le procédé comprend un autre démarrage du dispositif de traitement lors duquel le compteur monotone est initialisé à la première valeur de comptage si une condition d'état du dispositif est satisfaite.

Selon un mode de réalisation, la condition d'état correspond à l'état de programmation d'une zone de la mémoire.

Selon un mode de réalisation, la mémoire est configurée de sorte que l'accès aux premières données chiffrées ne soit pas autorisé sur la base d'une valeur de comptage supérieure à la première valeur de comptage.

Selon un mode de réalisation, la transmission de la première clef de chiffrement à un processeur cryptographique est effectuée par l'intermédiaire d'un bus dédié.

Un mode de réalisation prévoit un dispositif de traitement de données comprenant :
- un compteur monotone configuré pour générer une première valeur de comptage ;
- un circuit de dérivation de clefs configuré pour dériver, en utilisant une fonction de dérivation de clef, une première clef de chiffrement sur la base de la première valeur de comptage ; et
- un processeur cryptographique configuré pour recevoir la première clef de chiffrement, et déchiffrer, sur la base de la première clef de chiffrement, de premières données chiffrées.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un dispositif électronique selon un mode de réalisation de la présente description ;
la figure 2 illustre un exemple de fonctionnement d'un dispositif de traitement de la figure 1 ;
la figure 3 est un organigramme représentant des opérations d'un procédé de déchiffrement, par un processeur cryptographique, d'un code chiffré selon un exemple de réalisation de la présente description ;
la figure 4 représente des données et codes accessibles lors d'un démarrage sécurisé selon un autre mode de réalisation de la présente description ;
la figure 5 est un organigramme représentant des opérations d'un procédé de démarrage sécurisé d'un dispositif de traitement selon un exemple de réalisation de la présente description ; et
la figure 6 est un organigramme représentant des opérations d'un procédé de démarrage sécurisé d'un dispositif de traitement selon un autre exemple de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la conception de dispositifs de traitement est bien connue de la personne du métier et certains composants n'ont pas été décrits dans la suite.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

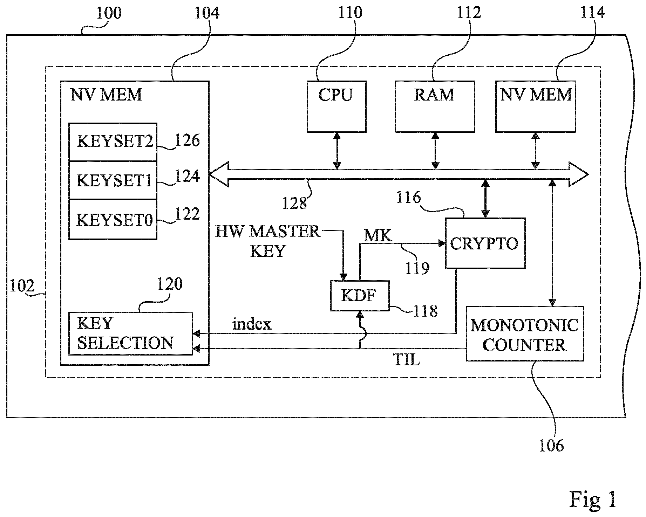

La figure 1 représente, de façon très schématique et sous forme de blocs, un dispositif électronique 100 comprenant un dispositif de traitement 102.

Le dispositif électronique 100 est par exemple une carte électronique telle qu'une carte à microcircuits, un matériel à usage informatique, un circuit à microprocesseur, etc.

Le dispositif de traitement 102 comprend par exemple une mémoire non volatile 104 (NV MEM), par exemple une mémoire flash. En variante, d'autres types de mémoire non volatile pourraient être utilisés. Le dispositif de traitement 102 comprend également un compteur monotone 106 (MONOTONIC COUNTER) .

Les compteurs monotones sont connus dans l'état de la technique, un exemple d'un tel compteur étant décrit dans la publication "Virtual Monotonic Counters and Count-Limited Objects using a TPM without a Trusted OS" de L.F.G. Sarmenta, M. Van Dijk, C.W. O'Donnell, J. Rhodes et S. Devadas, et en particulier dans la partie 3 de ce document. Ce document décrit des réalisations de compteur mis en œuvre sous forme matérielle et/ou logicielle. Le compteur monotone 106 est par exemple mis en œuvre de façon matérielle par un circuit numérique, tel qu'un circuit intégré personnalisé (ASIC, de l'anglais "Application Specific Integrated Circuit"). Le compteur monotone est configuré pour maintenir une valeur de comptage, accessible sur une sortie du compteur. Suite à une commande d'incrémentation, le compteur monotone augmente d'une ou plusieurs unités sa valeur de comptage mais, suite à chaque incrémentation, l'opération n'est pas réversible. En effet, le compteur monotone est configuré pour que sa valeur de comptage ne décroisse jamais. De plus, entre deux incrémentations, la valeur de comptage est par exemple protégée contre toutes modifications, pour qu'elle ne puisse être ni effacée, ni modifiée. Seule la commande d'incrémentation permet le remplacement de la valeur actuelle par une nouvelle valeur supérieure à la valeur actuelle.

Le compteur monotone 106 est par exemple configuré de sorte qu'aucune commande, mise à part une remise à zéro du dispositif de traitement, ne permette de revenir à la valeur précédente une fois la commande d'incrémentation exécutée. Par exemple, dans le cas où la valeur de comptage est stockée de manière volatile, chaque mise hors tension (coupure d'alimentation) du dispositif de traitement engendre la perte de la valeur de comptage et à chaque remise sous tension du dispositif, le compteur monotone génère à nouveau une valeur de comptage initiale. Dans le cas où la valeur de comptage est stockée dans un élément de mémorisation non volatile. A chaque redémarrage, une valeur de comptage initiale est par exemple réécrite dans l'élément de mémorisation non volatile du compteur monotone.

Le dispositif de traitement 102 comprend en outre un processeur générique 110 (CPU) non sécurisé. Par exemple, le processeur générique 110 est couplé par l'intermédiaire d'un bus 128 au compteur monotone 106 ainsi qu'à une mémoire non volatile 114 (NV MEM) et à la mémoire non volatile 104. La mémoire 114 est par exemple de type flash, mais d'autres types de mémoire non volatile pourraient être utilisés.

Le processeur générique 110 est en outre couplé par l'intermédiaire du bus 128 à un processeur cryptographique (CRYPTO) 116 ainsi qu'à une mémoire RAM (mémoire à accès aléatoire) 112.

Le processeur cryptographique 116 est en outre relié à un circuit de dérivation de clefs 118 (KDF), ayant une entrée reliée à la sortie du compteur monotone 106. En particulier, le circuit de dérivation de clefs 118 reçoit sur cette entrée une valeur de comptage (TIL) courante du compteur monotone 106. Les valeurs de comptage TIL générées par le compteur monotone 106 sont, par exemple, des valeurs de niveau d'isolation (temporal isolation level), qui permettent un contrôle dans le temps d'une opération de déchiffrement. En particulier, le circuit de dérivation de clefs 118 est configuré, par exemple, pour générer des clefs de chiffrement maîtres MK dérivées par une fonction de dérivation de clef sur la base de la valeur de comptage TIL générée par le compteur monotone 106, et éventuellement sur la base d'une clef de chiffrement maître du dispositif (HW MASTER KEY).

Les clefs de chiffrement maîtres MK sont fournies, par exemple par l'intermédiaire d'un bus dédié 119, au processeur cryptographique 116. Le processeur cryptographique 116 est par exemple configuré pour déchiffrer des données chiffrées sur la base des clefs de chiffrement maîtres MK dérivées par le circuit 118. Le compteur monotone 106 est par exemple commandé pour incrémenter sa valeur de comptage TIL pendant le fonctionnement du dispositif 102, par exemple pendant la phase de démarrage. Comme cette valeur de comptage TIL est prise en compte par la fonction de dérivation de clef implémentée par le circuit 118, le déchiffrement des données par le processeur cryptographique 116 sur la base de la clef de chiffrement maître MK correspondante dépend de cette valeur de comptage. Ainsi, il est possible de limiter des périodes de temps lors desquelles il est possible de déchiffres des données.

Dans un exemple de réalisation, les données déchiffrées sur la base des clefs de chiffrement maître MK sont des clefs de chiffrement chiffrés. Par exemple, la mémoire non volatile 114 contient des données chiffrées, par exemple des codes de démarrage chiffrés du dispositif de traitement 102. Des clefs de chiffrement permettant le déchiffrement de ces données chiffrées sont, elles aussi, chiffrées et sont stockées dans la mémoire 104. Dans l'exemple de la Figure 1, les clefs de chiffrement chiffrées sont stockées dans des zones 122, 124 et 126 (KEYSET0, KEYSET1 et KEYSET2) de la mémoire 104. Par exemple, un ensemble de clefs stockées dans la zone 122 est associé à une première valeur de comptage TIL, un ensemble de clefs stockées dans la zone 124 est associé à une deuxième valeur de comptage TIL supérieure à la première, et un ensemble de clefs stockées dans la zone 126 est associé à une troisième valeur de comptage TIL supérieur à la deuxième.

Dans certains cas, la mémoire 104 comprend un circuit de sélection 120 (KEY SELECTION), qui reçoit la valeur de comptage TIL et une valeur d'index, par exemple transmise par le processeur cryptographique 112, permettant la sélection d'une clef donnée dans chaque ensemble de clefs.

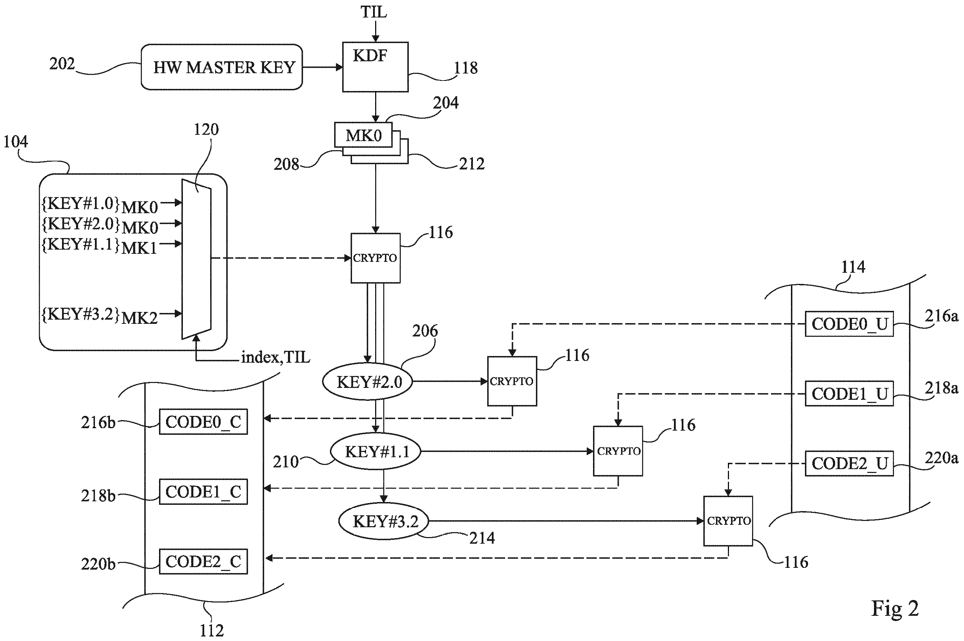

La figure 2 illustre un exemple de fonctionnement du dispositif de traitement 102 de la figure 1 pour le déchiffrement de clefs chiffrées stockées dans la mémoire non volatile 114. La figure 2 illustre en particulier le circuit de dérivation de clefs (KDF) 118, les mémoires 104, 112 et 114, ainsi que le processeur cryptographique (CRYPTO) 116. Dans la figure 2, les flèches en pointillées représentent des transferts de données par le bus 128, est des flèches solides représentent des transferts par bus ou connexion dédié.

Dans l'exemple illustré par la figure 2, la mémoire non volatile 114 comprend trois codes chiffrés 216a, 218a et 220a (CODE0_U, CODE1_U et CODE2_U). Par exemple ces codes sont des codes de démarrage. Le processeur cryptographique 116 est capable de déchiffrer chacun de ces codes chiffrés à l'aide des clefs de chiffrement chiffrées stockées dans la mémoire 104 afin de générer trois codes déchiffrés correspondants 216b, 218b, 220b (CODE0_C, CODE1_C et CODE2_C). La clef maître du dispositif (HW MASTER KEY) est par exemple stockée de façon sécurisée dans une mémoire non volatile 202, qui peut par exemple faire partie de la mémoire 104. La clef de chiffrement maître est par exemple une valeur qui est propre à chaque dispositif et est, par exemple, générée sur la base d'une fonction physiquement inclonable (PUF-Physically Unclonable Function). L'avantage d'utilisation d'une clef de chiffrement maître propre à chaque dispositif est que cela rend difficile le clonage du dispositif.

Dans la figure 2, le circuit de sélection 120 est représenté par un multiplexeur, qui reçoit comme signal de commande la valeur de comptage TIL et la valeur d'index. Dans d'autres exemples, seule l'une ou l'autre de ces valeurs est utilisée pour faire la sélection, ou la sélection est faite uniquement de façon logicielle, par exemple par le processeur générique 110 (non illustré dans la figure 2).

Dans une première phase de fonctionnement du dispositif 102, le compteur monotone 106 génère une première valeur de comptage TIL, égale par exemple à 0, et transmet cette valeur au circuit de dérivation de clefs 118, ainsi qu'au circuit de sélection 120. La clef maître de dispositif est par exemple également transmise au circuit de dérivation de clefs 118, qui dérive une première clef de chiffrement maître MK0 204 sur la base de la première valeur de comptage TIL 0, et dans certain cas, également sur la base de la clef maître du dispositif 202. Le circuit de dérivation de clefs 118 transmet ensuite la clef MK0 au processeur cryptographique 116, permettant le déchiffrement d'une ou plusieurs clefs de chiffrement chiffrées de la mémoire 104. Dans cet exemple, il s'agit des clefs de chiffrement chiffrées, associées à la valeur de comptage TIL 0, soit une première clef chiffrée {*KEY*#1.0}_{*MK*0} et une autre clef chiffrée {*KEY*#2.0}_{*MK*0}*.*

Dans cet exemple, la première clef chiffrée {*KEY*#2.0}_{*MK*0} est déchiffrée. La clef *KEY#*2.0 206 résultant de ce déchiffrement reste par exemple dans le processeur cryptographique 116, avant d'être utilisée à son tour pour déchiffrer le premier code chiffré 216a. Le premier code chiffré 216a est ensuite transmis au processeur cryptographique 116, et déchiffré en utilisant la clef *KEY#*2.0*.* Par exemple, la clef *KEY#*1.0 résultant du déchiffrement de l'autre clef chiffrée {*KEY#*1.0}_{*MK*0} est utilisée pour le déchiffrement d'un autre code chiffré non représenté en figure 2. Le premier code non chiffré 216b, correspondant au déchiffrement du premier code chiffré 216a, est par exemple transmis à la mémoire 112 et est par exemple exécuté par le processeur 110.

Dans une deuxième phase de fonctionnement du dispositif 102, le compteur monotone 106 génère une deuxième valeur de comptage TIL, égale par exemple à 1. Par exemple, le premier code non chiffré 216b, ou un autre code exécuté pendant la première phase de fonctionnement, comprend une instruction d'incrémentation du compteur monotone 106. Après cette incrémentation de la valeur de comptage TIL, le circuit de dérivation de clefs 118 n'est plus capable de dériver la clef de chiffrement maître MK0, car la valeur de TIL est supérieure à la première valeur TIL 0. De plus, dans certains exemples, le circuit de sélection 120 est configuré pour interdire, sur la base d'une valeur de comptage TIL supérieure à 0, l'accès aux clefs de chiffrement chiffrées associées à la valeur de comptage TIL 0.

La deuxième valeur de comptage TIL est transmise au circuit de dérivation de clefs 118, ainsi qu'au circuit de sélection 120. La clef maître de dispositif est par exemple également transmise au circuit de dérivation de clefs 118, qui dérive une deuxième clef de chiffrement maître MK1 208 sur la base de la deuxième valeur de comptage TIL 1, et dans certain cas, également sur la base de la clef maître du dispositif 202. Le circuit de dérivation de clefs 118 transmet ensuite la clef MK1 au processeur cryptographique 116, permettant le déchiffrement d'une ou plusieurs clefs de chiffrement chiffrées de la mémoire 104. Dans cet exemple, il s'agit des clefs de chiffrement chiffrées, associées à la valeur de comptage TIL 1, soit une clef chiffrée {*KEY#*1.1}_{*MK*1}*.*

Dans cet exemple, la clef chiffrée {K*EY#*1.1}_{*MK*1} est déchiffrée. La clef *KEY*#1.1 206 résultant de ce déchiffrement reste par exemple dans le processeur cryptographique 116, avant d'être utilisée à son tour pour déchiffrer le deuxième code chiffré 218a. Le deuxième code chiffré 218a est ensuite transmis au processeur cryptographique 116 et déchiffré en utilisant la clef *KEY*#1.1. Le deuxième code non chiffré 218b, correspondant au déchiffrement du premier code chiffré 218a, est par exemple transmis à la mémoire 112 et est, par exemple, exécuté par le processeur 110.

Dans une troisième phase de fonctionnement du dispositif 102, le compteur monotone 106 génère une troisième valeur de comptage TIL, égale par exemple à 2. Par exemple, le deuxième code non chiffré 218b, ou un autre code exécuté pendant la deuxième phase de fonctionnement, comprend une instruction d'incrémentation du compteur monotone 106. Après cette incrémentation de la valeur de comptage TIL, le circuit de dérivation de clefs 118 n'est plus capable de dériver les clefs de chiffrement maître MK0 et MK1, car la valeur de TIL est supérieure aux première et deuxième valeurs TIL 0 et TIL 1. De plus, dans certains exemples, la valeur de niveau TIL 2 est transmise au circuit de sélection 120, qui est configuré pour interdire, sur la base d'une valeur de comptage TIL supérieure à 1, l'accès aux clefs de chiffrement chiffrées associées aux valeurs de comptage TIL 0 et 1.

La troisième valeur de comptage TIL est transmise au circuit de dérivation de clefs 118, ainsi qu'au circuit de sélection 120. La clef maître de dispositif est par exemple également transmise au circuit de dérivation de clefs 118, qui dérive une troisième clef de chiffrement maître MK2 212 sur la base de la deuxième valeur de comptage TIL 2, et dans certain cas, également sur la base de la clef maître du dispositif 202. Le circuit de dérivation de clefs 118 transmet ensuite la clef MK2 au processeur cryptographique 116, permettant le déchiffrement d'une ou plusieurs clefs de chiffrement chiffrées de la mémoire 104. Dans cet exemple, il s'agit des clefs de chiffrement chiffrées associées à la valeur de comptage TIL 2, soit une clef chiffrée {*KEY*#3.2}_{*MK*2}*.*

Dans cet exemple, la clef chiffrée {*KEY*#3.2}_{*MK*2} est déchiffrée. La clef *KEY*#3.2 214 résultant de ce déchiffrement reste par exemple dans le processeur cryptographique 116, avant d'être utilisée à son tour pour déchiffrer le troisième code chiffré 220a. Le troisième code chiffré 220a est ensuite transmis au processeur cryptographique 116 et déchiffré en utilisant la clef *KEY*#3.2*.* Le troisième code non chiffré 220b, correspondant au déchiffrement du deuxième code chiffré 220a, est par exemple transmis à la mémoire 112 et est par exemple exécuté par le processeur 110.

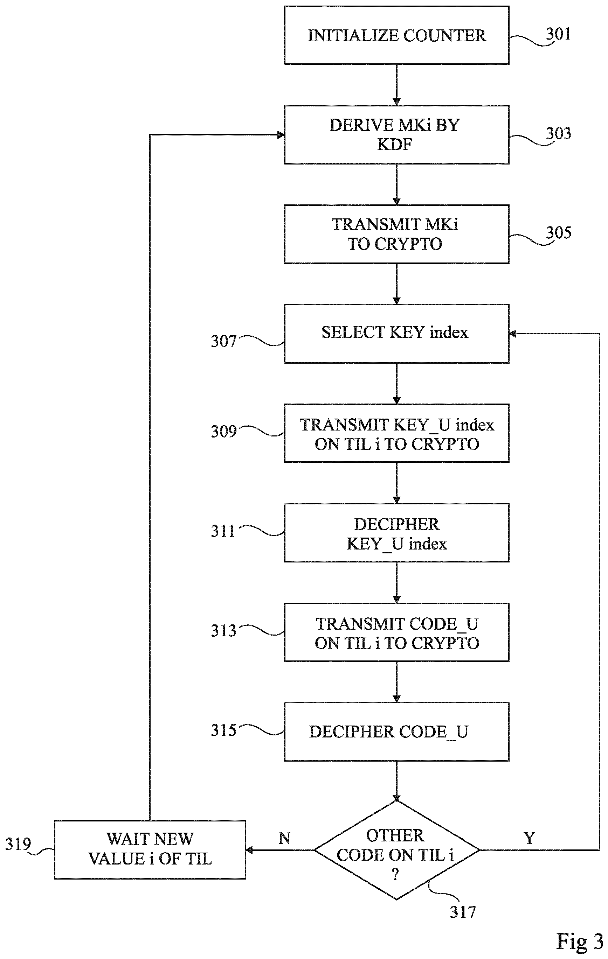

La figure 3 est un organigramme représentant des opérations d'un procédé de déchiffrement d'un code chiffré selon un mode de réalisation de la présente description. Ce procédé est par exemple mis en œuvre par le processeur générique 110, le compteur monotone 106, le circuit de sélection 120 et le processeur cryptographique 108, du dispositif de traitement de la figure 1.

Dans une étape 301 (INITIALIZE COUNTER), le compteur monotone 106 est initialisé à une valeur initiale, étant un entier naturel. Dans l'exemple dans lequel la valeur de comptage TIL est stockée de manière volatile, chaque mise sous tension du dispositif de traitement engendre l'initialisation de la valeur de comptage, par exemple à 0. Dans un autre exemple dans lequel la valeur de comptage est stockée sur des éléments de mémorisation non volatile, chaque mise sous tension du dispositif de traitement engendre le remplacement de la valeur de comptage courante par la valeur de comptage initiale, par exemple égale à 0. L'étape 301 a par exemple lieu suite à un démarrage du dispositif de traitement 102.

Dans certains modes de réalisation, la valeur de comptage initiale générée suite à une mise sous tension peut varier selon le contexte du dispositif de traitement. Par exemple, une ou plusieurs valeurs de comptage correspondent à des niveaux d'isolation réservés au fabricant du dispositif 102, et une mise sous tension effectuée par une entité intermédiaire entre le fabriquant et l'utilisateur final et/ou par l'utilisateur final déclenchera une valeur de comptage supérieure à ces valeurs de comptage réservées. Par exemple, si la valeur de comptage 0 est réservée au fabricant, une mise sous tension effectuée par une entité intermédiaire entre le fabriquant et l'utilisateur final et/ou par l'utilisateur final déclenchera une valeur de comptage égale à 1 et le ou les codes de démarrage ainsi que les données sensibles associées au niveau d'isolement 0 seront inaccessibles. Par exemple, en sortie de fabrication, un ou plusieurs bits stockés de façon non volatile dans la mémoire 104, ou dans une autre mémoire, sont programmés afin d'assurer que la valeur de comptage est initialisée à 1. Dans un exemple, ces bits correspondent à une valeur protégée par signature indiquant la valeur de comptage initiale à appliquer. Par exemple, la signature est générée sur la base d'une clef de chiffrement, et peut par exemple correspondre à une signature MAC (de l'anglais "Message Authentication Code"). Cette valeur est par exemple fournie au compteur monotone 106 par le bus 128. Il est alors possible, en changeant la valeur protégée par signature, de faire démarrer le compteur monotone 106 à nouveau à 0, ou à une autre valeur, pendant la vie du dispositif.

Dans une étape 303 (DERIVE MKi BY KDF) postérieure à l'étape 301, le compteur monotone 106 transmet la valeur de comptage courante TIL i au circuit de dérivation de clefs 118. Le circuit de dérivation de clefs 118 génère une clef maître dérivée MKi sur la base de la valeur de niveau TIL i, et dans certains cas sur la base de la clef maître de dispositif. D'autres paramètres pourraient également être pris en compte pour la dérivation de la clef maître dérivée MKi.

Dans une étape 305 (TRANSMIT MKi TO CRYPTO), postérieure à l'étape 303, la clef maître dérivée MKi est transmise au processeur cryptographique 116.

Dans une étape 307 (SELECT KEY index), une valeur d'index identifiant une clef de chiffrement chiffrée de la mémoire 104 est par exemple transmise à l'interface de sélection 120, ainsi que, dans certains cas, la valeur de comptage TIL i.

A titre d'exemple, dans l'étape 307, le processeur générique 110 ordonne le déchiffrement d'un code chiffré dont la clef de chiffrement est associée à la valeur de niveau TIL i. L'information de la valeur d'index identifiant la clef de chiffrement correspondante est par exemple transmise au circuit de sélection 120 et celui-ci sélectionne, sur la base de la valeur de niveau TIL i et de la valeur d'index, la clef de chiffrement chiffrée correspondante.

L'étape 307 est présentée à titre d'exemple et d'autres manières de sélectionner une clef de la mémoire 104 sont possibles.

Dans une étape 309 (TRANSMIT KEY_U index ON TIL i TO CRYPTO), postérieure à l'étape 307, la clef de chiffrement chiffrée sélectionnée dans l'étape 307 est transmise, par exemple par l'intermédiaire du bus 128, au processeur cryptographique 116. Dans un autre exemple, la clef de chiffrement chiffrée sélectionnée est transmise au processeur cryptographique 116 par l'intermédiaire d'un bus dédié (non illustré) reliant exclusivement la mémoire 104, en particulier les zones 122, 124 et 126, et le processeur cryptographique 116.

Dans une étape 311 (DECIPHER KEY_U index), postérieure à l'étape 309, le processeur cryptographique 116 déchiffre, à l'aide de la clef maître dérivée MKi générée dans l'étape 303, la clef chiffrée transmise dans l'étape 309 au processeur cryptographique 116. Une clef de chiffrement non chiffrée est ainsi obtenue et reste par exemple dans une mémoire du processeur cryptographique 116. Autrement dit, la clef de chiffrement non chiffrée n'est pas transmise à un quelconque autre processeur ou à une quelconque mémoire du dispositif 102.

Dans une étape 313 (TRANSMIT CODE_U ON TIL i TO CRYPTO), le code chiffré CODE_U est transmis, par exemple sous contrôle du processeur générique 110, au processeur cryptographique 116 par l'intermédiaire du bus de données 128.

Dans une étape 315 (DECIPHER CODE_U), postérieure à l'étape 315, le code et/ou les données chiffré(es) CODE_U sont déchiffrés par le processeur cryptographique 116 à l'aide la clef de chiffrement sélectionnée dans l'étape 307 et déchiffrée dans l'étape 311. Une fois le code CODE_U déchiffrés, celui-ci est par exemple transmis à la mémoire RAM 112 par l'intermédiaire du bus 128 puis est exécuté par le processeur générique 110. Par exemple, suite à l'exécution du code déchiffré, le procédé continue sur une étape 317 (OTHER CODE ON TIL i ?) dans laquelle le processeur générique 110 détermine si d'autres codes et/ou données chiffrés stockés par exemple dans la mémoire 114 et dont la clef de chiffrement est associée à la valeur de comptage TIL i sont en attente de déchiffrement. Si c'est le cas (branche Y) le procédé reprend à l'étape 307 dans lequel une nouvelle valeur d'index d'un nouveau code est déterminé et la clef de chiffrement chiffrée associé à la valeur de niveau TIL et identifiée par la nouvelle valeur d'index est sélectionnée par le circuit de sélection 120.

Si, suite à l'étape 317, tous les codes chiffrés associés à une clef de chiffrement associée à la valeur de comptage TIL i ont été correctement déchiffrés et transmis à la mémoire RAM 112, alors (branche N) le procédé continue dans une étape 319 (WAIT NEW VALUE OF TIL i) dans laquelle le circuit de sélection 120 est en attente d'une nouvelle valeur de comptage TIL i. Par exemple, la valeur de comptage TIL i est incrémenté lors du passage d'une phase de fonctionnement vers une autre phase de fonctionnement du circuit de traitement 102. Lorsqu'une nouvelle valeur de comptage TIL i est générée par le compteur monotone 106, le procédé reprend à l'étape 303 et les clefs de chiffrement chiffrée associées à une valeur de niveau TIL inférieure à la nouvelle valeur de niveau TIL ne sont plus accessibles.

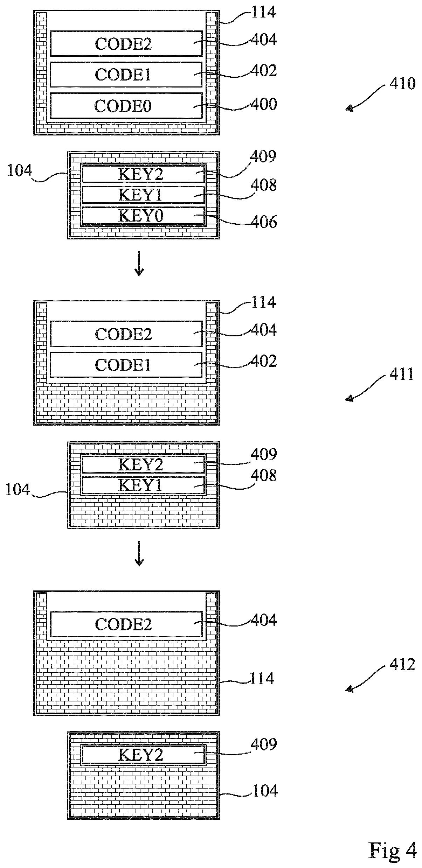

Les figures 4 à 6 illustrent un mode de réalisation de la présente description dans lequel les données chiffrées sont des codes de démarrage et/ou des clefs de chiffrement associées à ces codes, et la valeur de niveau TIL est incrémentée à la fin de chaque étape de la séquence de démarrage. Chaque valeur de niveau TIL correspond en outre à un ou plusieurs codes de démarrage associés à chaque étape de démarrage, ces codes étant rendus inaccessibles lorsque la valeur de niveau TIL courante est supérieure à la valeur de niveau TIL leur étant associée.

Dans l'exemple de la figure 4, des zones mémoire 406, 408 et 409 stockent des données sensibles associées respectivement à des codes de démarrage 400, 402 et 404 stockés dans la mémoire non volatile 114. Les zones 406, 408 et 409 sont par exemple des zones distinctes des zones 400, 402 et 404, mais restent associées à un niveau d'isolement correspondant à celui des codes de démarrage auxquels les données sont liées. Ces données sensibles incluent par exemple une ou plusieurs clefs de chiffrement stockées dans chaque zone 406, 408 et 409 et chacune de ces zones est contenue dans la mémoire non volatile 104. Selon un autre mode de réalisation, chaque zone 406, 408 et 409 est une sous-zone de la zone correspondante 400, 402 et 404.

Lors d'une première étape 410 de démarrage du dispositif de traitement illustrée en haut de la figure 4, la valeur de comptage courante est par exemple égale à 0. Dans l'exemple de la figure 4, un niveau d'isolement 0 est associé à un premier code (CODE0) ainsi qu'à des premières données sensibles (KEY0). Un circuit de contrôle d'accès à la mémoire 114 (non représenté) et le circuit de sélection 120 sont configurés, par exemple, pour que ce premier code et ces premières données soient exclusivement accessibles lorsque la valeur de comptage courante est égale à 0. Cependant, lors de l'étape 410, le circuit de contrôle d'accès et le circuit de sélection autorisent par exemple l'accès à toutes les zones mémoire 400, 402 et 404, ainsi qu'à toutes les zones 406, 408 et 409. En effet, dans certains cas, afin par exemple d'anticiper des étapes suivantes dans le procédé de démarrage, un ou plusieurs autres codes de démarrage (CODE1, CODE2) sont accessibles à la lecture pendant l'étape 410.

Par exemple, une fois que le premier code CODE0 est exécuté, le processeur générique 110 commande une première incrémentation de la valeur de comptage courante par le compteur monotone 106. Par exemple, le premier code comprend une commande demandant l'incrémentation du compteur. Cette commande est par exemple transmise vers un registre de commande (non illustré) du compteur monotone.

Après cette première incrémentation, la valeur de comptage courante du compteur monotone 204 est par exemple égale à 1, correspondant à une deuxième étape 511 du démarrage. Le circuit de contrôle d'accès ainsi que le circuit de sélection 120 reçoivent la nouvelle valeur de comptage courante, et sont configurés pour empêcher, sur la base de cette valeur de comptage supérieure à 0, tout accès au premier code ainsi qu'aux premières données qui sont associées au niveau d'isolation 0. Autrement dit, les zones mémoires 400 et 406 sont verrouillées sur la base de toute valeur de comptage strictement supérieure à 0.

Le niveau d'isolation 1 est associé à un deuxième code (CODE1) contenu dans la zone 402 ainsi qu'à des deuxièmes données (KEY1) contenues dans la zone 408. Selon un mode de réalisation, un troisième code (CODE2), par exemple associé au niveau d'isolation 2 et contenu dans la zone 404, est accessible pour lecture sur la base de la valeur de comptage courante égale à 1.

Par exemple, une fois que le deuxième code CODE1 est exécuté, le processeur générique 110 commande une deuxième incrémentation de la valeur de comptage courante par le compteur monotone 106. Par exemple, après cette deuxième incrémentation, la valeur de comptage courante du compteur monotone 106 est égale à 2, correspondant à une troisième étape 412 du démarrage. Le niveau d'isolation 2 est associé au troisième code CODE2 ainsi qu'à des troisièmes données (KEY2). Le circuit de contrôle d'accès et le circuit de sélection 120 reçoivent la nouvelle valeur de comptage, et sont configurés pour empêcher, sur la base de cette valeur de comptage supérieure à 1, tout accès au premier et au deuxième codes ainsi qu'aux premières et aux deuxièmes données qui sont associées aux niveaux d'isolation inférieurs ou égaux à 1.

Selon un mode de réalisation, lorsque le dernier code de démarrage est exécuté, par exemple le troisième code de démarrage, le processeur générique 110 commande une troisième incrémentation de la valeur de comptage courante par le compteur monotone. Le circuit de contrôle d'accès et le circuit de sélection 120 verrouillent alors tout accès aux premier, deuxième et troisième codes de démarrage ainsi qu'aux premières, deuxièmes et troisièmes données.

Selon un autre mode de réalisation, lorsque le dernier code de démarrage est exécuté, par exemple le troisième code de démarrage, la valeur de comptage courante n'est pas incrémentée par le compteur monotone 106 et l'accès au troisième code de démarrage ainsi qu'aux troisièmes données reste autorisé par le circuit de contrôle d'accès.

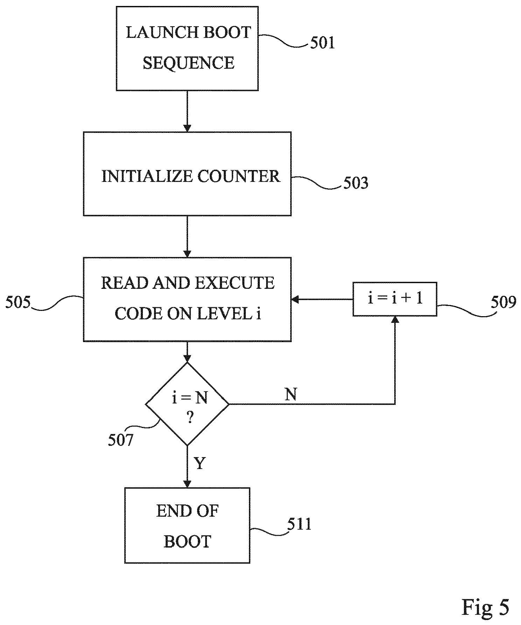

La figure 5 est un organigramme représentant des opérations d'un procédé de démarrage sécurisé d'un dispositif de traitement selon un exemple de réalisation de la présente description. Ce procédé est mis en œuvre par exemple par le processeur générique 110, le compteur monotone 106 et le circuit de contrôle d'accès et le circuit de sélection 120, du dispositif de traitement de la figure 1.

Dans une étape 501 (LAUNCH BOOT SEQUENCE) le dispositif de traitement 102 démarre. Dans un exemple il s'agit du premier démarrage du dispositif 102 après sa production. Dans un autre exemple il s'agit d'un démarrage effectué par une entité intermédiaire entre le fabriquant du dispositif 102 et son utilisateur final. Encore dans un autre exemple, il s'agit d'un démarrage dit de fonctionnement du dispositif électronique 100 effectué par l'utilisateur final.

Dans une étape 503 (INITIALIZE COUNTER), postérieure à l'étape 501, le compteur monotone est initialisé à une valeur initiale, étant un entier naturel. Dans l'exemple dans lequel la valeur de comptage est stockée de manière volatile, chaque mise sous tension du dispositif de traitement engendre l'initialisation de la valeur de comptage, par exemple à 0 ou à 1. Dans un autre exemple dans lequel la valeur de comptage est stockée sur des éléments de mémorisation non volatile, chaque mise sous tension du dispositif de traitement engendre le remplacement de la valeur de comptage courante par la valeur de comptage initiale, par exemple égale à 0 ou à 1.

Dans certains modes de réalisation, la valeur de comptage initiale générée suite à une mise sous tension peut varier selon l'état, ou contexte, du dispositif de traitement 102. Par exemple, une ou plusieurs valeurs de comptage correspondent à un ou plusieurs niveaux d'isolation réservés à une phase de paramétrisation initiale du dispositif 102, comprenant par exemple l'installation de micrologiciels. Les données et/ou codes associés à ces niveaux d'isolement sont par exemple utilisés pour cette paramétrisation initiale.

Par exemple, suite à la fabrication, le dispositif de traitement 102 a le contexte "vierge" et la valeur de comptage initiale est égale à une valeur réservée à la paramétrisation, telle que 0. Une fois la paramétrisation achevée, le contexte du dispositif devient par exemple "paramétrisation achevée". Avec ce nouveau contexte, la mise sous tension du dispositif 102, effectuée par exemple par une entité intermédiaire entre le fabriquant et l'utilisateur final et/ou par l'utilisateur final, déclenchera alors une valeur de comptage supérieure à la valeur de comptage réservée, et par exemple égale à 1. Le ou les codes de démarrage, ainsi que les données sensibles, associées au niveau d'isolement correspondant à la valeur de comptage réservée seront, par conséquent, inaccessibles.

Par exemple, le contexte du dispositif est détecté par la présence d'une tension sur une broche de démarrage du dispositif, cette tension étant appliquée par exemple par l'ajout d'un cavalier (en anglais "jumper") entre la broche de démarrage et une autre broche à une tension d'alimentation. A titre complémentaire ou alternatif, le contexte du dispositif est détecté par la valeur d'un ou plusieurs bits stockés de façon non volatile, et de manière protégée, dans la mémoire 104, ou dans une autre mémoire.

Dans un exemple, le processeur générique 110 est agencé pour détecter le contexte du dispositif 102 lors de la mise sous tension du dispositif 102, et pour configurer en conséquence la valeur de comptage initiale du compteur monotone 106. Dans un autre exemple, le compteur monotone 106 est agencé pour détecter lui-même le contexte du dispositif 102 et pour configurer lui-même sa valeur de comptage initiale, lors de la mise sous tension du dispositif 102.

Dans une étape 505 (READ AND EXECUTE CODE ON LEVEL i), postérieure à l'étape 503, les données et les codes de démarrage associés au niveau d'isolement i sont lus par le processeur générique 110 et les codes de démarrage associés au niveau d'isolement i sont exécutés. Une fois les codes du niveau i exécutés, le processeur générique 110 compare, dans une étape 507 (i=N ?) la valeur de comptage i à la valeur N, N étant la valeur de comptage associée à la dernière étape dans la séquence de démarrage, autrement dit les codes de démarrage du niveau d'isolement N sont les derniers à être exécutés selon le mode de réalisation de la présente description. Par exemple, dans l'exemple de la figure 4, N est égale à 2. Si i n'est pas égal à N (branche N), le procédé continue dans une étape 509 (i=i+1) dans laquelle le processeur générique déclenche l'incrémentation de la valeur de comptage. Par exemple, la valeur de comptage passe de i à i+1. Il est également possible que l'incrémentation augmente la valeur i de plusieurs unités. Le procédé reprend alors à l'étape 505.

Dans le cas où, suite à l'étape de comparaison 507, la valeur de comptage est égale à N (branche Y), le procédé se termine sur une étape 511 (END OF BOOT) dans laquelle le démarrage du dispositif de traitement se termine. Selon un mode de réalisation, la valeur de comptage courante reste égale à N suite à l'étape 511. Selon un autre mode de réalisation, la valeur de comptage est incrémentée lors de l'étape 511, et la valeur de comptage courante devient égale à N+1. Dans ce deuxième cas, le circuit de contrôle d'accès et le circuit de sélection sont configurés pour empêcher tout accès à tous les codes de démarrage sur la base de cette valeur de comptage.

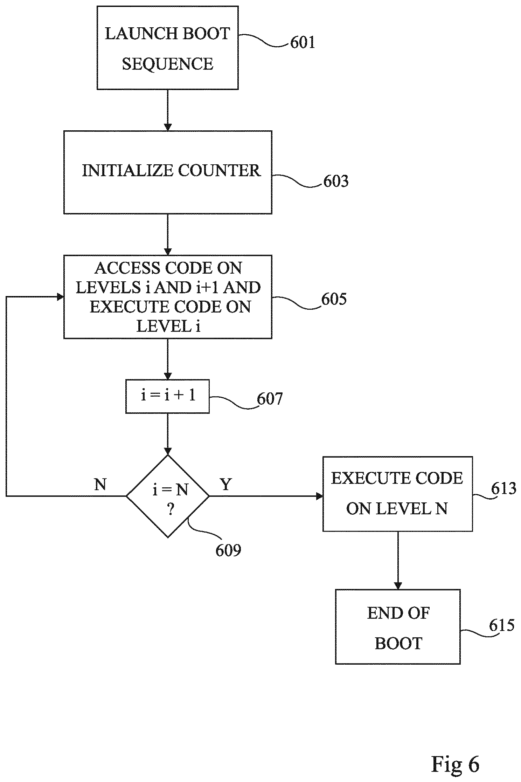

La figure 6 est un organigramme représentant des opérations d'un procédé de démarrage sécurisé d'un dispositif de traitement selon un autre exemple de réalisation de la présente description. Ce procédé est mis en œuvre par exemple par le processeur générique 110, le compteur monotone 106 et le circuit de contrôle d'accès et le circuit de sélection 120, du dispositif de traitement de la figure 1.

Les étapes 601 et 603 sont similaires aux étapes 501 et 503 de la figure 5, et ne vont pas être décrites à nouveau en détail.

Dans une étape 605 (ACCESS CODE ON LEVELS i AND i+1 EXECUTE CODE ON LEVEL i), postérieure à l'étape 603, les données et les codes de démarrage associés aux niveaux d'isolement i+1 sont accessibles par le processeur générique 110 et le ou les codes de démarrage associés au niveau d'isolement i sont exécutés.

Dans un exemple, les données ou codes associés au niveau d'isolement i contiennent une ou plusieurs clefs de chiffrement, chiffrées ou non, qui seront utilisées lors de l'exécution d'un ou plusieurs codes associés au niveau d'isolement i+1. Ainsi, un accès pour écriture est par exemple autorisé sur la ou les zones mémoire associées au niveau d'isolement i+1 afin de provisionner les clefs aux codes associés au niveau d'isolement i+1.

Dans un autre exemple, les codes associés au niveau d'isolement i contiennent des instructions visant à vérifier l'intégrité des données et/ou codes associés au niveau d'isolement i+1. Ainsi, un accès en lecture de la ou des zones mémoire associées au niveau d'isolement i+1 est autorisé afin d'effectuer cette vérification.

Dans une étape 607 (i=i+1), postérieure à l'étape 605, la valeur de comptage est incrémentée. Par exemple la valeur de comptage passe de i à i+1. Dans d'autres exemples, l'incrémentation augmente i de plusieurs unités.

Dans une étape 609 (i=N ?) le processeur générique 110 compare la valeur de comptage i à la valeur N, où N est défini comme décrit en relation avec l'étape 507 de la figure 5. Si la valeur i n'est pas égale à N (branche N) le procédé revient à l'étape 605.

Dans le cas où, lors de l'étape de comparaison 609, la valeur de comptage est égale à N (branche Y), le procédé continue sur une étape 613 (EXECUTE CODE ON LEVEL N) dans laquelle le ou les codes de démarrage associés au niveau d'isolation N sont exécutés.

Le démarrage du dispositif de traitement se termine par une étape 615 (END OF BOOT), qui est similaire à l'étape 511 de la figure 5, et n'est pas décrite à nouveau en détail.

Le procédé dont la mise en œuvre est présentée par la figure 6 permet une lecture des codes de démarrage en décalé. En effet les codes de démarrage associés à un niveau d'isolement sont lus lorsque la valeur de comptage est inférieure à la valeur du niveau. Cela permet un gain de temps par rapport à la mise en œuvre du procédé présenté dans la figure 5.

Un avantage des modes de réalisation décrits est que des codes, ainsi que de données sensibles en termes de confidentialité, sont protégées de façon efficace par l'utilisation d'un compteur monotone et d'un circuit de dérivation de clefs pour verrouiller le déchiffrement des clefs chiffrées.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, différents types de processeurs peuvent être utilisés. De plus, le nombre de niveaux d'isolement peut varier.

Enfin, la mise en œuvre pratique des modes de réalisation et variantes décrits est à la portée de la personne du métier à partir des indications fonctionnelles données ci-dessus. En particulier la mise en œuvre de la sélection des clefs de chiffrement est à la portée de la personne du métier.

## Revendications

1. Procédé de déchiffrement de données chiffrées, le procédé comprenant :
- la génération d'une première valeur de comptage par un compteur monotone (106) d'un dispositif de traitement (102) ;
- la dérivation, en utilisant un circuit de dérivation de clefs (118), d'une première clef de chiffrement sur la base de la première valeur de comptage ;
- la transmission de la première clef de chiffrement à un processeur cryptographique (116) ; et
- le déchiffrement, sur la base de la première clef de chiffrement, de premières données chiffrées.

2. Procédé selon la revendication 1, comprenant en outre la réception, par le processeur cryptographique, de premières données chiffrées (122) stockées dans une mémoire non-volatile (104).

3. Procédé selon la revendication 2, dans lequel les premières données chiffrées comprennent un premier ensemble d'une ou plusieurs autres clefs de chiffrement chiffrées associées à la première valeur de comptage.

4. Procédé selon la revendication 3, comprenant en outre :
- la sélection du premier ensemble d'autres clefs de chiffrement chiffrées dans la mémoire non volatile (104) ; et
- la mise à disposition du premier ensemble d'autres clefs de chiffrement chiffrées au processeur cryptographique (116), dans lequel le déchiffrement de premières données comprend le déchiffrement, par le processeur cryptographique sur la base de la première clef de chiffrement, du premier ensemble d'autres clefs de chiffrement chiffrées.

5. Procédé selon la revendication 3 ou 4, comprenant en outre :
- le déchiffrement, par le processeur cryptographique (116) ou par un autre processeur cryptographique, des premières autres données chiffrées stockées dans la mémoire (104) ou dans une autre mémoire, sur la base du premier ensemble d'autres clefs de chiffrement déchiffrées.

6. Procédé selon la revendication 5, dans lequel le déchiffrement des premières autres données chiffrées est effectué par le processeur cryptographique (116), le premier ensemble d'autres clefs de chiffrement déchiffrées étant stocké dans une mémoire du processeur cryptographique.

7. Procédé selon l'une quelconque des revendications 1 à 6, comprenant en outre :
- la génération d'une deuxième valeur de comptage par le compteur monotone (106) du dispositif de traitement (102) ;
- la dérivation, en utilisant le circuit de dérivation de clefs (118), d'une deuxième clef de chiffrement sur la base de la deuxième la valeur de comptage ;
- la transmission de la deuxième clef de chiffrement au processeur cryptographique (116) ; et
- le déchiffrement, sur la base de la deuxième clef de chiffrement, de deuxièmes données chiffrées.

8. Procédé selon la revendication 7, dans lequel le compteur monotone (106) est initialisé à la première valeur de comptage lors d'un premier démarrage du dispositif de traitement (102), le procédé comprenant en outre, l'initialisation du compteur monotone à la deuxième valeur de comptage lors un deuxième démarrage du dispositif de traitement.

9. Procédé selon la revendication 8, comprenant un autre démarrage du dispositif de traitement (102) lors duquel le compteur monotone (106) est initialisé à la première valeur de comptage si une condition d'état du dispositif est satisfaite.

10. Procédé selon la revendication 9, dans lequel la condition d'état correspond à l'état de programmation d'une zone de la mémoire (104).

11. Procédé selon l'une quelconque des revendications 2 à 6 ou de 7 à 10 dans sa dépendance à la revendication 2, dans lequel la mémoire non volatile (104) est configurée de sorte que l'accès aux premières données chiffrées ne soit pas autorisé sur la base d'une valeur de comptage supérieure à la première valeur de comptage.

12. Procédé selon l'une quelconque des revendications 1 à 11, dans lequel la transmission de la première clef de chiffrement à un processeur cryptographique (116) est effectuée par l'intermédiaire d'un bus dédié.

13. Dispositif de traitement de données comprenant :
- un compteur monotone (106) configuré pour générer une première valeur de comptage ;
- un circuit de dérivation de clefs (118) configuré pour dériver, en utilisant une fonction de dérivation de clef, une première clef de chiffrement sur la base de la première valeur de comptage ; et
- un processeur cryptographique (116) configuré pour recevoir la première clef de chiffrement, et déchiffrer, sur la base de la première clef de chiffrement, de premières données chiffrées.

14. Dispositif selon la revendication 13, dans lequel le circuit cryptographique (116) est en outre configuré pour recevoir les premières données chiffrées, les premières données chiffrées étant stockées dans une mémoire non volatile (104), la mémoire non volatile étant configurée de sorte que l'accès aux premières données chiffrées ne soit pas autorisé sur la base d'une valeur de comptage supérieure à la première valeur de comptage.
